# EUROPEAN PATENT SPECIFICATION

(11) **EP 3 338 939 B1**
(45) Date of publication and mention of the grant of the patent: **30.09.2020**
(21) Application number: 17204904.1
(22) Date of filing: 01.12.2017
(51) Int. Cl.: B23P 9/02, B24B 39/00, C22F 1/04, B24B 27/00, C21D 7/08, C21D 7/02

(54) **DEEP ROLLING TOOL AND METHOD**
FESTWALZWERKZEUG UND -VERFAHREN
OUTIL ET PROCÉDÉ DE LAMINAGE EN PROFONDEUR

(30) Priority: 20.12.2016 US 201615385684
(43) Date of publication of application: 27.06.2018
(73) Proprietor: United Technologies Corporation, Farmington, CT 06032 (US)
(72) Inventor: HAWKES, Justin R., Marlborough, CT Connecticut 06447 (US); RAMPONE, Joseph C., Colchester, CT Connecticut 06415 (US); KUCZEK, Andrzej Ernest, Bristol, CT Connecticut 06010 (US); EL-WARDANY, Tahany Ibrahim, Bloomfield, CT Connecticut 06002 (US); SALVA, Randy P., Baltic, CT Connecticut 06330 (US); CLAVETTE, Patrick Louis, Simsbury, CT Connecticut 06070 (US); GAROSSHEN, Thomas J., Glastonbury, CT Connecticut 06033 (US); MEUSEL, Adam S., Newington, CT Connecticut 06111 (US); KLECKA, Michael A., Coventry, CT Connecticut 06238 (US); ERICKSON, Robert E., Storrs, CT Connecticut 06268 (US); WYSOCKI, Joseph B., Somers, CT Connecticut 06071 (US)
(74) Representative: Dehns

(56) References cited:
- EP-A1- 2 821 159
- WO-A1-2015/105655
- WO-A2-2016/041540
- CN-A- 105 414 883
- US-A1- 2005 155 203
- US-A1- 2005 229 666
- US-A1- 2012 204 390
- US-A1- 2014 007 394
- US-A1- 2015 165 513

## Description

### BACKGROUND

The present invention relates to an apparatus and a method for deep rolling metals to induce compressive stresses.

A low plasticity burnishing (LPB) process can be used on aluminum fan blade roots to improve damage tolerance from e.g., corrosion. This can increase fatigue life or maintain fatigue life in the presence of damage (e.g., corrosion pits).

Known LPB tools for complex geometries utilize a ball bearing at the end of an axisymmetric, hydraulically actuated shaft. However, this tool is expensive and it involves complex processing steps. Further, despite its relatively high precision, the small surface area of a ball bearing unnecessarily slows production time and throughput. These known tools also cannot be readily used with widely available machine tools due to the need to maintain and constantly adjust hydraulic pressure on the bearing surface.

An alternative process includes deep rolling process, which can induce high compressive stresses up to 1.5 mm depth from the surface of a material through localized plastic deformation to prevent corrosion pits, foreign object damage, crack initiation, etc..

Known deep rolling tools available in the market are usually used for simple geometries In addition, these tools are expensive may involve complex processing steps, and is sometimes difficult to use for thin walls or complex shapes that require five and six axes deep rolling paths and can be easily achieved using robotic arrangements.

Controlling the contact stress between the roller and material being processed is important to achieving desired improvements in material properties. With insufficient contact stress, little or no improvement will be achieved. In addition, there is also a need to customize the applied load and consequently the contact stress along the deep rolling path. Too high of a contact stress can damage the material on/near the surface resulting in a decrement in properties.

WO 2015/105655 A1 describes systems and method for tool path approximation which may comprise approximating the outer surface of a part to be worked. The tool path may be implemented on a computer numerically controlled machine that is configured to control a flexible fork peening tool.

CN 105 414 883 A describes a roll finishing device that comprises a rolling wheel, a bearing block, a guide rail, a linear bearing, a cylinder guide rod connected with the guide rail as well as a belleville spring group and a sliding bearing which are mounted on the cylinder guide rod.

WO 2016/041540 A2 describes rolling unit for machining running surfaces of axles for rail vehicles, where the rolling unit comprises at least one deep roller with which the running surfaces which are to be machined are subjected to deep-rolling after the production of the axle.

US 2012/204390 A1 describes a burnishing tool and method for providing a surface treatment along the surface of a work piece, the burnishing tool having a tool head comprising a bearing for supporting a rolling element and an encasement for supporting the bearing.

US 2005/229666 A1 describes a roller type hemming apparatus includes a support member having a slide bore. A ball screw extends through the support member into the slide bore This document discloses the features of the preamble of claim 1.

US 2015/165513 A1 describes a device and methods for deep rolling, where a machine includes a deep rolling tool having a plurality of rolling elements, wherein each rolling element is mounted at the distal end of a fork arm.

### SUMMARY

The tool assembly according to the invention is defined in claim 1 and includes a robotic assembly, a tool mount, and a non-axisymmetric deep rolling tool. The robotic assembly includes a plurality of linear arms connected in series between a base end and a working end. Adjacent ones of the plurality of arms are connected via a corresponding plurality of multi-axis joints such that the working end is articulated by movement of one or more of the plurality of arms relative to one or more of the plurality of multi-axis joints. The tool mount is connected to one of the linear arms or one of the multi-axis joints at the working end of the robotic assembly. The non-axisymmetric deep rolling tool is connected to the tool mount, and includes a spring-loaded shaft assembly disposed along a first axis. A hub is connected to a distal end of the spring-loaded shaft assembly. The hub has an upper hub portion adjacent to the distal end of the spring-loaded shaft assembly aligned with the first axis, and a lower hub portion extending along a second axis. The second axis forms a nonzero angle relative to the first axis. A roller disk is joined to the lower portion of the hub. The roller disk has a working surface about its perimeter and is rotatable about the second axis parallel to the second portion of the hub. The working surface of the roller disk includes a profile along its width such that an effective radius of the roller disk varies along a width thereof.

Preferred embodiments of the tool assembly of the invention are defined in the dependent claims 2 to 7.

Preferably, the spring-loaded shaft assembly comprises a flexible shaft.

Preferably, the spring-loaded shaft assembly comprises: a rigid shaft; and a resilient element disposed at a distal end of the spring-loaded shaft assembly proximate to the hub.

Preferably, the rigid shaft is supported by a linear bearing arranged along the first axis.

Preferably, the resilient element comprises a plurality of stacked Belleville washers.

Preferably, the tool assembly comprises: a load cell disposed along the first axis, the load cell adapted to measure a force applied along the shaft between a proximal end of the shaft assembly and the roller disk.

Preferably, the load cell is contiguous with the resilient element.

Preferably, the load cell is in communication with a monitor adapted to receive signals corresponding to an instantaneous load on the resilient element.

Preferably, the monitor is part of a controller for the robotic arm with closed-loop feedback logic, the controller adapted to vary a downward force applied by the robotic arm to the tool along the first axis based on one or more of the received signals.

The method according to the invention is defined in claim 8 and includes supporting a workpiece in a fixture, the workpiece having a first nonplanar surface. A first rolling operation is performed on the first nonplanar surface, the first rolling operation including operating a robotic assembly to apply a downward force over a rolling path of a non-axisymmetric deep rolling tool. The downward force is applied to a proximal end of a spring-loaded tool shaft aligned with a first axis, such that the downward force is transferred through the shaft to a hub disposed at a distal end of the shaft assembly. The transferred downward force is transmitted from an upper portion of the hub aligned with the first axis to a lower portion of the hub parallel to a second axis. The second axis forms a nonzero angle relative to the first axis, about which a roller disk is supported by one or more bearings. A resulting compressive force is applied to the first nonplanar surface of the workpiece via a working surface of the roller disk. The robotic assembly includes a plurality of linear arms connected in series between a base end and a working end, adjacent ones of the plurality of arms connected via a corresponding plurality of multi-axis joints such that the working end is articulated by movement of one or more of the plurality of arms relative to one or more of the plurality of multi-axis joints. The working surface of the roller disk includes a profile along its width such that an effective radius of the roller disk varies along a width thereof such that the resulting compressive force applied to the first nonplanar surface varies along the width of the working surface.

Preferred embodiments of the method according to the invention are defined in the dependent claims 9 to 14.

Preferably, the working surface of the roller disk is crowned from a center to opposing first and second edges.

Preferably, the deep rolling tool shaft comprises: a rigid shaft extending along the first axis; and a resilient element disposed at a distal end of the rigid shaft adjacent to the hub.

Preferably, the method further comprises: operating a load cell disposed along the first axis to generate signals corresponding to an instantaneous load on the spring-loaded tool shaft.

Preferably, the method further comprises: transmitting the signals to a controller for monitoring the applied compressive forces during the first rolling operation.

Preferably, the method further comprises: varying the downward force of the robotic arm based on the signals generated by the load cell such that the resulting compressive force is within a predetermined range along a tool rolling path.

Preferably, the method further comprises using the tool to perform a second rolling operation on a second nonplanar surface of the workpiece.

Preferably, the workpiece comprises a fan blade for a gas turbine engine.

Preferably, the first nonplanar surface includes a junction between an airfoil and a dovetail root.

### BRIEF DESCRIPTION OF THE DRAWINGS

FIG. 1 is a perspective view of a dovetail root portion of a gas turbine engine blade.
FIG. 2 shows a roller processing a workpiece such as a blade root shown in FIG. 1.
FIG. 3 is a perspective view of an embodiment of a deep rolling tool.
FIG. 4 is an exploded view of the deep rolling tool embodiment in FIG. 3.
FIG. 5 shows an embodiment of a deep rolling tool attached to a robot arm for accessing difficult to process areas of a workpiece with the deep rolling tool.

### DETAILED DESCRIPTION

Generally, a roller disk with a crowned or otherwise nonplanar working surface about its perimeter can be attached to an end of a spring loaded shaft. The tool can be attached to a device to process one or more parts. The tool uses multiple tool passes to induce residual compressive stresses while maintaining the appropriate level or range of contact stresses at the roller's point of contact via selective spring loading of the tool.

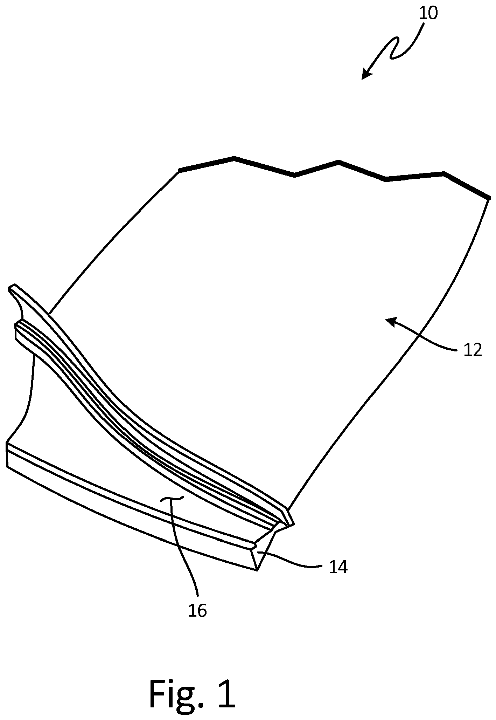

FIG. 1 shows workpiece 10, which can be supported in a suitable fixture (not shown). Workpiece 10 has airfoil 12 and dovetail root 14. At least one nonplanar surface is to be processed (e.g., junction 16 between airfoil 12 and root 14) to have residual compressive stresses near the surface in and around junction 16.

In this example, workpiece 10 is an aluminum alloy fan blade for a turbofan engine, but the process can be adapted to nearly any workpiece having a nonplanar surface into which residual compression stresses are desired to be incorporated.

Thus in the example of a dovetail-rooted blade, it is desired to increase residual compressive stresses around both sides of junction 16 between dovetail root 14 and airfoil 12. As most of the bending stresses are concentrated around junction 16, this location is most prone to fatigue damage. The combined effects of fatigue and corrosion pitting can be reduced via deep rolling because the residual compressive stress induced by application of the rolling tool (shown in subsequent figures) reduces the pathways for damage to propagate through the part, extending the time before failure or replacement.

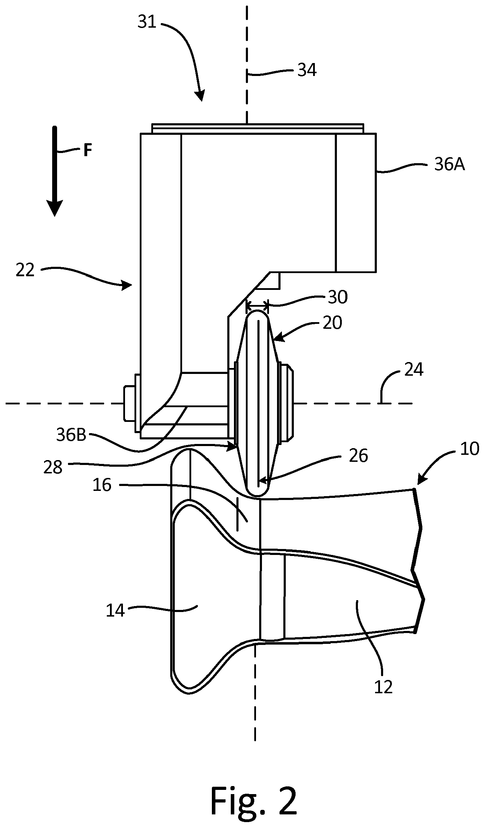

FIG. 2 shows roller disk 20 processing junction 16 of workpiece / blade 10 between airfoil 12 and root 14. Disk 20 is joined to a portion of hub 22 with roller disk 20 rotatable about an axis 24 angled relative to a downward force direction F. Here, axis 24 is normal to downward force direction F and thus, resulting downward contact force is applied to junction 16 generally in direction F as well.

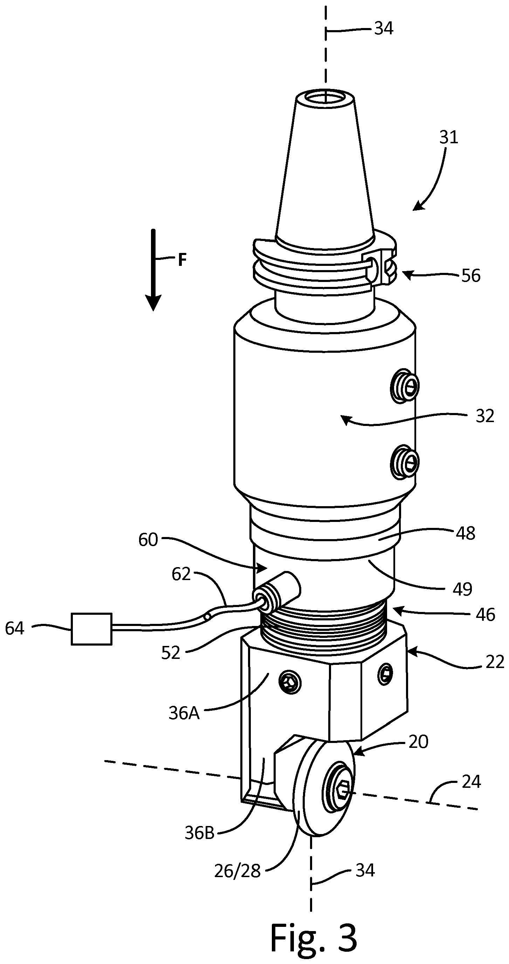

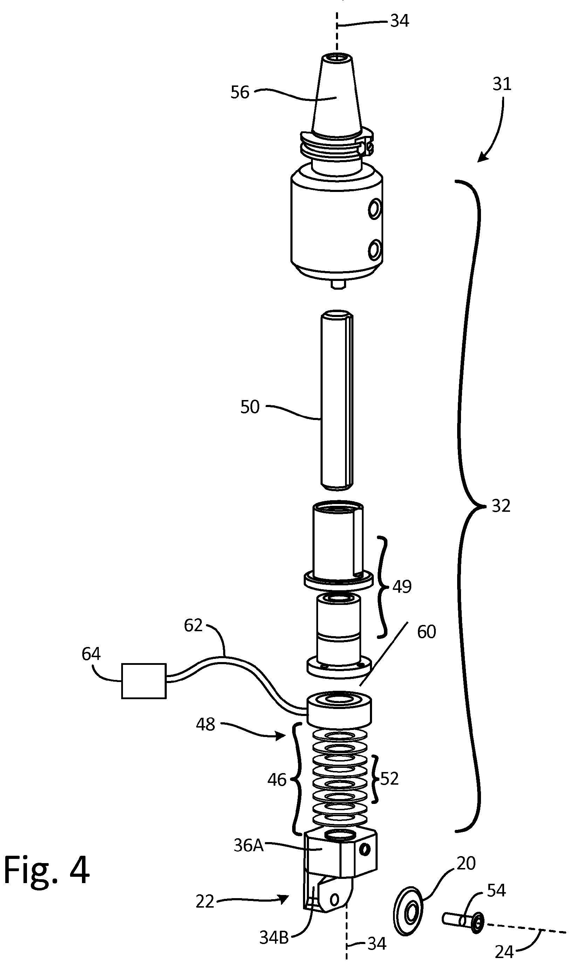

Disk 20 has working surface 26 about its perimeter 28, and according to the invention includes a profile along its width 30 (best seen in FIGS. 3 and 4), such that an effective radius of the roller disk varies along a width thereof. It can be seen in FIG. 2 that the disk should be of a radius that provides clearance over protruding regions of the workpiece (e.g., dovetail root 14). In a conventional arrangement for processing a modern aluminum fan blade dovetail, this requires a minimum disk radius of about 2 inches (51 cm), but the size will vary depending on a particular application.

Hub 22 connects disk 20 to a shaft through which the downward force can be applied in direction F. One example embodiment of a deep rolling tool incorporating this construction is shown in FIG. 3. Tool assembly 31 includes spring-loaded shaft assembly 32 disposed along axis 34, which is parallel to downward force direction F. Hub 22 has a first / upper portion 36A along axis 34 and a second / lower portion 36B at a nonzero angle relative to axis 34. This angle is therefore consistent with the nonzero angle between axis 24 and direction F.

Operation of tool assembly 31 can be as follows. The rolling operation includes applying a force in direction F along axis 34 such that the applied force is transferred through spring-loaded shaft assembly 32, hub 22, and roller disk 20 to a first nonplanar surface of the workpiece (e.g., junction 16). The resulting force applied to the first nonplanar surface varies according to the invention along the width of working surface 26 of the disk due to the variable profile across width 30 (seen in FIG. 2).

At least one rolling operation is performed on a nonplanar surface using a tool like that shown in FIG. 3. FIG. 3 depicts roller disk 20 joined to second / lower portion 36B of hub 22, and which is rotatable about axis 24 through second / lower portion 36B of hub 22. Roller disk 20 can be supported on one or more bearings (best seen in the exploded view of FIG. 4). As noted with respect to FIG. 2, disk 20 can have working surface 26 about perimeter 28, and can include a variable or crowned profile. As a result, an effective radius (and thus applied bearing stresses) of roller disk 20 varies along working surface 26. Though shown as a crowned roller with a single center peak, working surface 26 can additionally have one or more peaks, troughs, etc. The resulting profile can thus either be curved, slanted, or flat.

Spring-loaded shaft assembly 32 can take several different forms. In one non-limiting example, resilient element 46 is disposed at distal end 48 of shaft assembly 32, while a rigid shaft 50 (best seen in FIG. 4) can be supported on a device to restrain its movement only along first axis 34.

This can include one or more linear bearings 49. In other embodiments, shaft assembly 32 can include a flexible beam without a separate resilient element.

With regard to resilient element 46, certain non-limiting embodiments include a plurality of stacked Belleville washers 52 which can be selected in number and properties in order to provide a desired level of resilience. Alternatively, resilient element 30 can include a diaphragm spring or the like.

Certain embodiments of tool assembly 31 can also optionally include other elements. For one, tool assembly 31 can include tool holder 56 mounted to proximal end 58 of rigid shaft 50 and/or shaft assembly 32. Tool holder 56 can be a standard or custom adapter or other device to facilitate attachment of tool assembly 31 to commercially available multi-axis computerized numerical control (CNC) machines (not shown). Tool holder 56 can additionally or alternatively facilitate attachment to other devices capable of steering tool assembly 31 while simultaneously applying sufficient (but not excessive) force in downward direction F to induce the desired compressive stresses.

In certain embodiments, tool assembly 31 can include load cell 60 to measure the force at the contact surface (see FIG. 4). Load cell 60 can optionally be disposed along axis 34 adjacent to resilient element 46, and can include a wired and/or wireless connection 62 for controller 64. This will be explained in more detail below.

FIG. 4 shows an exploded view of tool assembly 31 from FIG. 3. In addition to the elements described generally above, tool assembly 31 can include the following details. As noted, shaft assembly 32 is restricted to movement only along first axis 34. Thus, in this example embodiment, shaft assembly 32 can include linear bearing 49 arranged along axis 34 for supporting rigid shaft 50. This simplifies determination of the downward force that needs to be applied in direction F, as any deflection away from that axis causes a reduction in the actual downward force vectors, while also applying unwanted transverse forces on the tool working surface.

In the example shown, hub 22 includes first and second portions 36A, 36B which form a right, or other, angle therebetween. Roller disk 20 is supported on a bearing or other device so that it is rotatable about axis 24. Here, with the right angle, axis 24 is perpendicular to first axis 34.

In this example, working surface 26 of roller disk 20 is symmetrically crowned from a center to opposing first and second edges. Alternatively, working surface varies according to a desired load profile along the tool path and can include peaks, troughs, curves, etc.

Shaft assembly 32 can be calibrated before or between uses to provide a desired force concentration at working surface 26 of roller disk 20. In the example shown, at least one of rigid shaft 50 and resilient element 46 can be calibrated so that the force applied to the tool in direction F (shown in FIGS. 2 and 3) and transmitted through roller disk 20 is sufficient to impart a residual compression stress in the workpiece at the first nonplanar surface (e.g. junction 16 in FIGS. 1 and 2).

The deep rolling tool described heretofore can be used in a number of different applications, depending on the required accuracy and precision of the applied forces needed. Success in some cases can be achieved by merely controlling the tool load within previously determined upper and lower bounds, such as through spring loading the tool and applying a target amount of compression to the spring. The compliance obtained by using a spring loaded tool enables an acceptable level of load control during processing but there is no record of what the actual contact stress was over the surface. However, this is the cheapest and often simplest option, where any suitable mechanical device with an ability to provide a controlled downward force can be used.

Some parts, however, require that the actual residual stresses at the working surface be verified. There are currently no non-destructive evaluation techniques that can be used to verify the correct level of residual stress was achieved during processing. Thus, a load cell or another feedback mechanism can be incorporated into the tool that allows monitoring and/or real-time adjustment of the force applied through the roller to the workpiece. The tool can process a part using multiple tool passes while maintaining the appropriate level of contact stress at the roller's point of contact. In some cases, the feedback is logged for quality control, so that it can be determined whether any irregularities occurred in the process. This is useful where scrapping and reprocessing parts is not a significant cost or limiting factor.

As was shown and described above, load cell 60 can optionally be incorporated into tool assembly 32. Load cell 60, in certain embodiments, is contiguous to resilient element 46 (e.g., plurality of Belleville washers 52), and enables real time monitoring of the applied load during processing. A deep rolling tool with an integral load cell thus enables verification of a key process parameter, roller load, which is critical for quality control in many production environments.

Process consistency could be further enhanced by using the load cell for closed loop load control which improve the precision with which the load could be maintained. Such a system would be much more tolerant of dimensional variability in the components being processed. It will also ensure that there are no microcracks on surface due to inadvertent localized application of intensive pressure.

Load cell 60 can be in wired or wireless communication with a controller 64 and/or monitor adapted to receive wired or wireless signals corresponding to an instantaneous load on resilient element 36. Controller / monitor 64 can include closed-loop feedback logic, by which it can be adapted to vary a force applied in direction F (see also FIGS. 2 and 3) on tool assembly 31, along axis 34. Operating load cell 60 can generate signals corresponding to an instantaneous load on resilient element 46. The magnitude of the force can be based at least in part on one or more of the signals received from and generated by load cell 60. The applied force is varied based on a plurality of signals from load cell 60 to impart a substantially equal residual compression stress in the workpiece along a tool rolling path on the first nonplanar surface.

The nature of many tools for CNC machines requires that they be axisymmetric (generally to facilitate rotation of the tool working end). Thus CNC programming and many common subroutines are generally tailored to this expectation. In contrast, the non-axisymmetric nature of tool assembly 31 can require that the CNC machine be provided with more complex programming even for some relatively simple tool paths. Depending on the desired tool paths and number of passes, programming and use of a CNC machine may be unnecessary or prohibitively complex, in which case, tool assembly 31 can be mounted to a different machine to apply the desired force over the contact path. While certain processes can generally performed using a specialized tool in a conventional CNC milling machine, the deep rolling tool can be inconsistent with generic subroutines and tool paths used to manipulate conventional axisymmetric tools. Therefore use of the deep rolling tool, which is not axisymmetric, has additional path programming constraints. While planar surfaces can be processed by the deep rolling tool using a 3-axis CNC machine, more complex geometry components will require at least a 5-axis machine and in some instances a 6-axis machine may be necessary. Maintaining the normality and orientation constraints for deep rolling of complex component geometries can be challenging as the tool path programming software won't automatically satisfy these required constraints. While creative programming can generally overcome these issues it may require an experienced and highly skilled programmer.

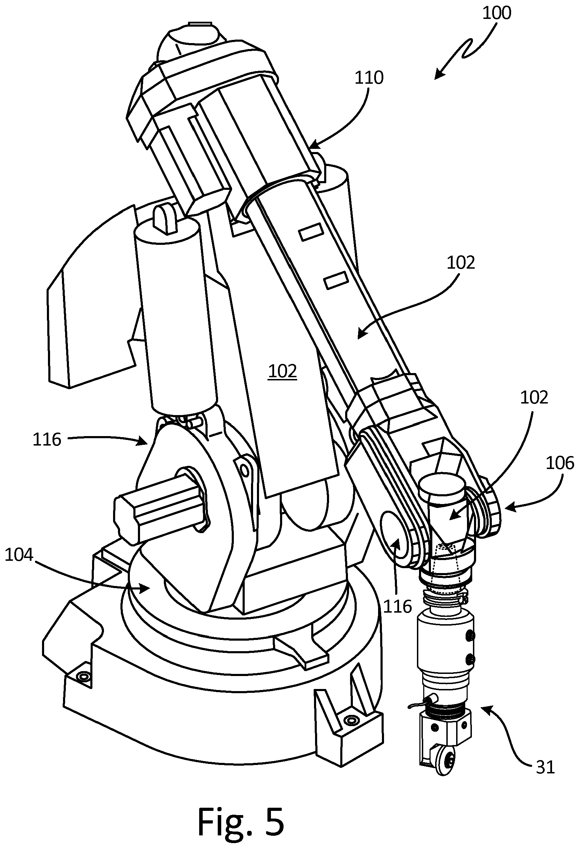

To overcome this, according to the invention the deep rolling tool assembly 31 is attached to the end of a robotic arm 100 as shown in FIG. 5. Robotic assembly 100 includes a plurality of linear arms 102 connected in series between base end 104 and working end 106. Adjacent ones of arms 102 are connected via a corresponding plurality of multi-axis joints 110 such that working end 106 is articulated by movement of one or more of arms 102 relative to one or more of multi-axis joints 110.

Operation of a robotic assembly such as assembly 100 in FIG. 5 includes using it to apply a downward force over a rolling path of non-axisymmetric deep rolling tool assembly 31. The downward force is applied to a proximal end of a spring-loaded tool shaft (best seen in FIG. 2) aligned with a first axis, such that the downward force is transferred through the shaft to a hub disposed at a distal end of the shaft assembly (also best seen in FIG. 2). In certain embodiments, robotic assembly 100 is sufficiently programmed and/or controlled to provide the appropriate instantaneous feedback of downward force, and the resilient element in tool 31 can be modified or omitted as needed.

As described above, the transferred downward force is transmitted from an upper portion of the hub aligned with the first axis to a lower portion of the hub parallel to a second axis. The second axis forms a nonzero angle relative to the first axis, about which a roller disk is supported by one or more bearings. A resulting compressive force is applied to the first nonplanar surface of the workpiece via a working surface of the roller disk.

A typical commercial robot arm has more degrees of freedom than a 5-axis milling machine which facilitates processing of complex geometry parts. Current commercially available robot arms have been developed to the point where they can withstand the combination of high loads and precision required in deep rolling applications. The software for controlling robot arms is different to that for CNC milling machines and is more suited to maintaining the required orientation constraints of a multi-axis deep rolling tool. Also, it is easier to accommodate processing of large components using a robot arm, as the part does not have to fit inside the machine as it does with a milling machine.

While the invention has been described with reference to an exemplary embodiment(s), intended that the invention not be limited to the particular embodiment(s) disclosed, but that the invention will include all embodiments falling within the scope of the appended claims.

## Claims

1. A tool assembly (31) comprising:
a robotic assembly (100) including a plurality of linear arms (102) connected in series between a base end (104) and a working end (106), adjacent ones of the plurality of arms (102) connected via a corresponding plurality of multi-axis joints (110) such that the working end (106) is articulated by movement of one or more of the plurality of arms (102) relative to one or more of the plurality of multi-axis joints (110);
a tool mount (56) connected to an arm (102) or a multi-axis joint (110) at the working end (106) of the robotic assembly (100); **characterized by**
a non-axisymmetric deep rolling tool connected to the tool mount (56), the non-axisymmetric deep rolling tool comprising:
a spring-loaded shaft assembly (32) disposed along a first axis (34);
a hub (22) connected to a distal end of the spring-loaded shaft assembly (32), the hub (22) having an upper hub portion (36A) adjacent to the distal end (48) of the spring-loaded shaft assembly (32) aligned with the first axis (34), and a lower hub portion (36B) extending along a second axis (24), the second axis (24) forming a nonzero angle relative to the first axis (34); and
a roller disk (20) joined to the lower portion (36B) of the hub (22), the roller disk (20) having a working surface (26) about its perimeter and being rotatable about the second axis (24) parallel to the lower hub portion (36B); wherein the working surface (26) of the roller disk (20) includes a profile along its width (30) such that an effective radius of the roller disk (20) varies along a width (30) thereof.

2. The assembly (31) of claim 1, wherein the spring-loaded shaft assembly (32) comprises a flexible shaft.

3. The assembly (31) of claim 1, wherein the spring-loaded shaft assembly (32) comprises:
a rigid shaft (50); and
a resilient element (46) disposed at a distal end (48) of the spring-loaded shaft assembly (32) proximate to the hub (22).

4. The assembly (31) of claim 3, wherein the rigid shaft (50) is supported by a linear bearing (49) arranged along the first axis (34), and/or
wherein, optionally, the resilient element (46) comprises a plurality of stacked Belleville washers (52).

5. The assembly (31) of any preceding claim and further comprising:
a load cell (60) disposed along the first axis (34), the load cell (60) adapted to measure a force applied along the shaft between a proximal end of the shaft assembly (32) and the roller disk (20),
wherein, optionally, the load cell is contiguous with the resilient element.

6. The assembly (31) of claim 5, wherein the load cell (60) is in communication with a monitor adapted to receive signals corresponding to an instantaneous load on the resilient element (46).

7. The assembly (31) of claim 6, wherein the monitor is part of a controller (64) for the robotic arm (102) with closed-loop feedback logic, the controller (64) adapted to vary a downward force applied by the robotic arm (102) to the tool (31) along the first axis (34) based on one or more of the received signals.

8. A method comprising:
supporting a workpiece (10) in a fixture, the workpiece (10) having a first nonplanar surface (12, 14, 16): and
performing a first rolling operation on the first nonplanar surface (12, 14, 16), the first rolling operation comprising:
operating a robotic assembly (100) to apply a downward force over a rolling path of a non-axisymmetric deep rolling tool, the downward force is applied to a proximal end of a spring-loaded tool shaft (32) aligned with a first axis (34), such that the downward force is transferred through the shaft (32) to a hub (22) disposed at a distal end (48) of the shaft assembly (32); and
transmitting the transferred downward force from an upper portion (36A) of the hub (22) aligned with the first axis (34) to a lower portion (36B) of the hub (22) parallel to a second axis (24), the second axis (24) forming a nonzero angle relative to the first axis (34), about which a roller disk (20) is supported by one or more bearings, such that a resulting compressive force is applied to the first nonplanar surface (12, 14, 16) of the workpiece (10) via a working surface (26) of the roller disk (20);
wherein the robotic assembly (100) comprises a plurality of linear arms (102) connected in series between a base end (104) and a working end (106), adjacent ones of the plurality of arms (102) connected via a corresponding plurality of multi-axis joints (110) such that the working end (106) is articulated by movement of one or more of the plurality of arms (102) relative to one or more of the plurality of multi-axis joints (110); wherein: the working surface (26) includes a profile along its width (30) such that an effective radius of the roller disk (20) varies along a width (30) thereof, such that the resulting compressive force applied to the first nonplanar surface (12, 14, 16) varies along the width (30) of the working surface (26).

9. The method of claim 8, wherein the working surface (26) of the roller disk (20) is crowned from a center to opposing first and second edges.

10. The method of claim 8 or 9, wherein the deep rolling tool shaft comprises:
a rigid shaft (50) extending along the first axis (34); and
a resilient element (46) disposed at a distal end (48) of the rigid shaft (50) adjacent to the hub (22), or
the deep rolling tool shaft comprises a flexible shaft.

11. The method of any of claims 8 to 10, and further comprising:
operating a load cell (60) disposed along the first axis (34) to generate signals corresponding to an instantaneous load on the spring-loaded tool shaft (32),
optionally further comprising:
transmitting the signals to a controller (64) for monitoring the applied compressive forces during the first rolling operation

12. The method of any of claims 8 to 11, and further comprising:
varying the downward force of the robotic arm (102) based on the signals generated by the load cell (60) such that the resulting compressive force is within a predetermined range along a tool rolling path.

13. The method of any of claims 8 to 12, and further comprising using the tool to perform a second rolling operation on a second nonplanar surface (12, 14, 16) of the workpiece (10).

14. The method of claim 13, wherein the workpiece (10) comprises a fan blade for a gas turbine engine,
wherein, optionally, the first nonplanar surface includes a junction (16) between an airfoil (12) and a dovetail root (14).

## Patentansprüche

1. Werkzeugbaugruppe (31), umfassend:
eine robotische Baugruppe (100), die eine Vielzahl von linearen Armen (102) beinhaltet, die in Reihe zwischen einem Basisende (104) und einem Arbeitsende (106) verbunden sind, wobei benachbarte aus der Vielzahl von Armen (102) über eine entsprechende Vielzahl von Multiachsenverbindungen (110) verbunden sind, sodass das Arbeitsende (106) durch Bewegung von einem oder mehreren aus der Vielzahl von Armen (102) relativ zu einer oder mehreren aus der Vielzahl von Multiachsenverbindungen (110) angelenkt wird;
eine Werkzeughalterung (56), die mit einem Arm (102) oder einer Multiachsenverbindung (110) an dem Arbeitsende (106) der robotischen Baugruppe (100) verbunden ist; **gekennzeichnet durch**
ein nicht achsensymmetrisches Festwalzwerkzeug, das mit der Werkzeughalterung (56) verbunden ist, wobei das nicht achsensymmetrische Festwalzwerkzeug Folgendes umfasst:
eine federbelastete Wellenbaugruppe (32), die entlang einer ersten Achse (34) angeordnet ist;
eine Nabe (22), die mit einem distalen Ende der federbelasteten Wellenbaugruppe (32) verbunden ist, wobei die Nabe (22) einen oberen Nabenabschnitt (36A) benachbart zu dem distalen Ende (48) der federbelasteten Wellenbaugruppe (32) ausgerichtet auf die erste Achse (34) und einen unteren Nabenabschnitt (36B) aufweist, der sich entlang einer zweiten Achse (24) erstreckt, wobei die zweite Achse (24) einen Winkel ungleich Null relativ zu der ersten Achse (34) bildet; und
eine Walzscheibe (20), die mit dem unteren Abschnitt (36B) der Nabe (22) verbunden ist, wobei die Walzscheibe (20) eine Arbeitsfläche (26) um ihren Umfang aufweist und um die zweite Achse (24) parallel zu dem unteren Nabenabschnitt (36B) drehbar ist;
wobei
die Arbeitsfläche (26) der Walzscheibe (20) ein Profil entlang ihrer Breite (30) beinhaltet, sodass ein effektiver Radius der Walzscheibe (20) entlang einer Breite (30) davon variiert.

2. Baugruppe (31) nach Anspruch 1, wobei die federbelastete Wellenbaugruppe (32) eine flexible Welle umfasst.

3. Baugruppe (31) nach Anspruch 1, wobei die federbelastete Wellenbaugruppe (32) Folgendes umfasst:
eine starre Welle (50); und
ein nachgiebiges Element (46), das an einem distalen Ende (48) der federbelasteten Wellenbaugruppe (32) neben der Nabe (22) angeordnet ist.

4. Baugruppe (31) nach Anspruch 3, wobei die starre Welle (50) durch ein lineares Lager (49) gestützt wird, das entlang der ersten Achse (34) angeordnet ist, und/oder
wobei optional das nachgiebige Element (46) eine Vielzahl von gestapelten Belleville-Scheiben (52) umfasst.

5. Baugruppe (31) nach einem vorhergehenden Anspruch und ferner umfassend:
eine Wägezelle (60), die entlang der ersten Achse (34) angeordnet ist, wobei die Wägezelle (60) ausgelegt ist, um eine Kraft zu messen, die entlang der Welle zwischen einem proximalen Ende der Wellenbaugruppe (32) und der Walzscheibe (20) ausgeübt wird,
wobei optional die Wägezelle angrenzend an das nachgiebige Element ist.

6. Baugruppe (31) nach Anspruch 5, wobei die Wägezelle (60) in Kommunikation mit einem Monitor steht, der ausgelegt ist, um Signale entsprechend einer aktuellen Last auf das nachgiebige Element (46) zu empfangen.

7. Baugruppe (31) nach Anspruch 6, wobei der Monitor Teil einer Steuerung (64) für den robotischen Arm (102) mit geschlossener Regelkreislogik ist, wobei die Steuerung (64) ausgelegt ist, um eine Abwärtskraft, die durch den robotischen Arm (102) auf das Werkzeug (31) entlang der ersten Achse (34) ausgeübt wird, basierend auf einem oder mehreren der empfangenen Signale zu variieren.

8. Verfahren, umfassend:
Stützen eines Arbeitsstücks (10) in einer Befestigung, wobei das Arbeitsstück (10) eine erste nichtplanare Fläche (12, 14, 16) aufweist; und
Durchführen eines ersten Walzvorgangs an der ersten nichtplanaren Fläche (12, 14, 16), wobei der erste Walzvorgang Folgendes umfasst:
Bedienen einer robotischen Baugruppe (100), um eine Abwärtskraft über einen Walzweg eines nicht achsensymmetrischen Festwalzwerkzeugs auszuüben, wobei die Abwärtskraft auf ein proximales Ende einer federbelasteten Werkzeugwelle (32) ausgeübt wird, die auf eine erste Achse (34) ausgerichtet ist, sodass die Abwärtskraft durch die Welle (32) auf eine Nabe (22) übertragen wird, die an einem distalen Ende (48) der Wellenbaugruppe (32) angeordnet ist; und
Übertragen der übertragenen Abwärtskraft von einem oberen Abschnitt (36A) der Nabe (22), der auf die erste Achse (34) ausgerichtet ist, auf einen unteren Abschnitt (36B) der Nabe (22) parallel zu einer zweiten Achse (24), wobei die zweite Achse (24) einen Winkel ungleich Null relativ zu der ersten Achse (34) bildet, um die eine Walzscheibe (20) durch ein oder mehrere Lager gestützt wird, sodass eine resultierende Kompressionskraft auf die erste nichtplanare Fläche (12, 14, 16) des Werkstücks (10) über eine Arbeitsfläche (26) der Walzscheibe (20) ausgeübt wird;
wobei die robotische Baugruppe (100) eine Vielzahl von linearen Armen (102) umfasst, die in Reihe zwischen einem Basisende (104) und einem Arbeitsende (106) verbunden sind, wobei benachbarte aus der Vielzahl von Armen (102) über eine entsprechende Vielzahl von Multiachsenverbindungen (110) verbunden sind, sodass das Arbeitsende (106) durch Bewegung von einem oder mehreren aus der Vielzahl von Armen (102) relativ zu einer oder mehreren aus der Vielzahl von Multiachsenverbindungen (110) angelenkt wird;
wobei:
die Arbeitsfläche (26) ein Profil entlang ihrer Breite (30) beinhaltet, sodass ein effektiver Radius der Walzscheibe (20) entlang einer Breite (30) davon variiert, sodass die resultierende Kompressionskraft, die auf die erste nichtplanare Fläche (12, 14, 16) ausgeübt wird, entlang der Breite (30) der Arbeitsfläche (26) variiert.

9. Verfahren nach Anspruch 8, wobei die Arbeitsfläche (26) der Walzscheibe (20) von einer Mitte zu einer gegenüberliegenden ersten und zweiten Kante gekrönt ist.

10. Verfahren nach Anspruch 8 oder 9, wobei die Festwalzwerkzeugwelle Folgendes umfasst:
eine starre Welle (50), die sich entlang der ersten Achse (34) erstreckt; und
ein nachgiebiges Element (46), das an einem distalen Ende (48) der starren Welle (50) benachbart zu der Nabe (22) angeordnet ist, oder
wobei die Festwalzwerkzeugwelle eine flexible Welle umfasst.

11. Verfahren nach einem der Ansprüche 8 bis 10, und ferner umfassend:
Bedienen einer Wägezelle (60), die entlang der ersten Achse (34) angeordnet ist, um Signale zu erzeugen, die einer aktuellen Last auf die federbelastete Werkzeugwelle (32) entsprechen,
optional ferner umfassend:
Übertragen der Signale an eine Steuerung (64) zum Überwachen der ausgeübten Kompressionskräfte während des ersten Walzvorgangs.

12. Verfahren nach einem der Ansprüche 8 bis 11, und ferner umfassend:
Variieren der Abwärtskraft des robotischen Arms (102) basierend auf den Signalen, die durch die Wägezelle (60) erzeugt werden, sodass die resultierende Kompressionskraft innerhalb eines vorbestimmten Bereichs entlang eines Werkzeugwalzweges liegt.

13. Verfahren nach einem der Ansprüche 8 bis 12, und ferner umfassend das Verwenden des Werkzeugs, um einen zweiten Walzvorgang an einer zweiten nichtplanaren Fläche (12, 14, 16) des Werkstücks (10) durchzuführen.

14. Verfahren nach Anspruch 13, wobei das Werkstück (10) eine Gebläseschaufel für ein Gasturbinentriebwerk umfasst,
wobei optional die erste nichtplanare Fläche eine Verbindung (16) zwischen einem Schaufelprofil (12) und einem Schwalbenschwanzfuß (14) beinhaltet.

## Revendications

1. Ensemble outil (31) comprenant :
un ensemble robotique (100) comportant une pluralité de bras linéaires (102) reliés en série entre une extrémité de base (104) et une extrémité de travail (106), les bras adjacents de la pluralité de bras (102) étant reliés par l'intermédiaire d'une pluralité correspondante d'articulations multiaxiales (110) de sorte que l'extrémité de travail (106) est articulée par le mouvement d'un ou de plusieurs de la pluralité de bras (102) par rapport à une ou plusieurs de la pluralité d'articulations multiaxiales (110) ;
un support d'outil (56) relié à un bras (102) ou à une articulation multiaxiale (110) au niveau de l'extrémité de travail (106) de l'ensemble robotique (100) ; **caractérisé par**
un outil de laminage en profondeur non axisymétrique relié au support d'outil (56), l'outil de laminage en profondeur non axisymétrique comprenant :
un ensemble arbre à ressort (32) disposé le long d'un premier axe (34) ;
un moyeu (22) relié à une extrémité distale de l'ensemble arbre à ressort (32), le moyeu (22) ayant une partie de moyeu supérieure (36A) adjacente à l'extrémité distale (48) de l'ensemble arbre à ressort (32) alignée avec le premier axe (34), et une partie de moyeu inférieure (36B) s'étendant le long d'un second axe (24), le second axe (24) formant un angle non nul par rapport au premier axe (34) ; et
un disque à rouleaux (20) joint à la partie inférieure (36B) du moyeu (22), le disque à rouleaux (20) ayant une surface de travail (26) autour de son périmètre et pouvant tourner autour du second axe (24) parallèlement à la partie de moyeu inférieure (36B) ;
dans lequel
la surface de travail (26) du disque à rouleaux (20) comporte un profil le long de sa largeur (30) de sorte qu'un rayon effectif du disque à rouleaux (20) varie le long d'une largeur (30) de celui-ci.

2. Ensemble (31) selon la revendication 1, dans lequel l'ensemble arbre à ressort (32) comprend un arbre flexible.

3. Ensemble (31) selon la revendication 1, dans lequel l'ensemble arbre à ressort (32) comprend :
un arbre rigide (50) ; et
un élément élastique (46) disposé au niveau d'une extrémité distale (48) de l'ensemble arbre à ressort (32) à proximité du moyeu (22).

4. Ensemble (31) selon la revendication 3, dans lequel l'arbre rigide (50) est supporté par un palier linéaire (49) agencé le long du premier axe (34), et/ou
dans lequel, éventuellement, l'élément élastique (46) comprend une pluralité de rondelles Belleville empilées (52).

5. Ensemble (31) selon une quelconque revendication précédente et comprenant en outre :
une cellule de charge (60) disposée le long du premier axe (34), la cellule de charge (60) étant conçue pour mesurer une force appliquée le long de l'arbre entre une extrémité proximale de l'ensemble arbre (32) et le disque à rouleaux (20),
dans lequel, éventuellement, la cellule de charge est contiguë à l'élément élastique.

6. Ensemble (31) selon la revendication 5, dans lequel la cellule de charge (60) est en communication avec un moniteur conçu pour recevoir des signaux correspondant à une charge instantanée sur l'élément élastique (46).

7. Ensemble (31) selon la revendication 6, dans lequel le moniteur fait partie d'un dispositif de commande (64) pour le bras robotique (102) avec une logique de rétroaction en boucle fermée, le dispositif de commande (64) étant conçu pour faire varier une force descendante appliquée par le bras robotique (102) à l'outil (31) le long du premier axe (34) sur la base d'un ou de plusieurs des signaux reçus.

8. Procédé comprenant :
le support d'une pièce à usiner (10) dans un appareil, la pièce à usiner (10) ayant une première surface non plane (12, 14, 16) : et
la réalisation d'une première opération de laminage sur la première surface non plane (12, 14, 16), la première opération de laminage comprenant :
l'actionnement d'un ensemble robotique (100) pour appliquer une force descendante sur un chemin de laminage d'un outil de laminage en profondeur non axisymétrique, la force descendante est appliquée à une extrémité proximale d'un arbre d'outil à ressort (32) alignée avec un premier axe (34), de sorte que la force descendante est transférée à travers l'arbre (32) à un moyeu (22) disposé au niveau d'une extrémité distale (48) de l'ensemble arbre (32) ; et
la transmission de la force descendante transférée depuis une partie supérieure (36A) du moyeu (22) alignée avec le premier axe (34) vers une partie inférieure (36B) du moyeu (22) parallèle à un second axe (24), le second axe (24) formant un angle non nul par rapport au premier axe (34), autour duquel un disque à rouleaux (20) est supporté par un ou plusieurs paliers, de sorte qu'une force de compression résultante est appliquée à la première surface non plane (12, 14, 16) de la pièce à usiner (10) par l'intermédiaire d'une surface de travail (26) du disque à rouleaux (20) ;
dans lequel l'ensemble robotique (100) comprend une pluralité de bras linéaires (102) reliés en série entre une extrémité de base (104) et une extrémité de travail (106), des bras adjacents de la pluralité de bras (102) étant reliés par l'intermédiaire d'une pluralité correspondante d'articulations multiaxiales (110) de sorte que l'extrémité de travail (106) est articulée par le mouvement d'un ou de plusieurs de la pluralité de bras (102) par rapport à une ou plusieurs de la pluralité d'articulations multiaxiales (110) ;
dans lequel :
la surface de travail (26) comporte un profil le long de sa largeur (30) de sorte qu'un rayon effectif du disque à rouleaux (20) varie le long d'une largeur (30) de celui-ci, de sorte que la force de compression résultante appliquée à la première surface non plane (12, 14, 16) varie le long de la largeur (30) de la surface de travail (26).

9. Procédé selon la revendication 8, dans lequel la surface de travail (26) du disque à rouleaux (20) est bombée depuis un centre vers des premier et second bords opposés.

10. Procédé selon la revendication 8 ou 9, dans lequel l'arbre d'outil de laminage en profondeur comprend :
un arbre rigide (50) s'étendant le long du premier axe (34) ; et
un élément élastique (46) disposé au niveau d'une extrémité distale (48) de l'arbre rigide (50) adjacente au moyeu (22), ou
l'arbre d'outil de laminage en profondeur comprend un arbre flexible.

11. Procédé selon l'une quelconque des revendications 8 à 10, et comprenant en outre :
l'actionnement d'une cellule de charge (60) disposée le long du premier axe (34) pour générer des signaux correspondant à une charge instantanée sur l'arbre d'outil à ressort (32), comprenant éventuellement en outre :
la transmission des signaux à un dispositif de commande (64) pour surveiller les forces de compression appliquées pendant la première opération de laminage.

12. Procédé selon l'une quelconque des revendications 8 à 11, et comprenant en outre :
la variation de la force descendante du bras robotique (102) sur la base des signaux générés par la cellule de charge (60) de sorte que la force de compression résultante se trouve dans une plage prédéterminée le long d'un chemin de laminage d'outil.

13. Procédé selon l'une quelconque des revendications 8 à 12, et comprenant en outre l'utilisation de l'outil pour réaliser une seconde opération de laminage sur une seconde surface non plane (12, 14, 16) de la pièce à usiner (10).

14. Procédé selon la revendication 13, dans lequel la pièce à usiner (10) comprend une pale de ventilateur pour un moteur à turbine à gaz,
dans lequel, éventuellement, la première surface non plane comporte une jonction (16) entre un profil aérodynamique (12) et une emplanture en queue d'aronde (14).
